Europäisches Patentamt

European Patent Office

Office européen des brevets

(19)

(11) Veröffentlichungsnummer: **0 062 805**
**B1**

(12) **EUROPÄISCHE PATENTSCHRIFT**

(45) Veröffentlichungstag der Patentschrift: **04.07.90**

(21) Anmeldenummer: **82102500.4**

(22) Anmeldetag: **25.03.82**

(51) Int. Cl.⁵: **A 23 G 9/20**, A 23 G 9/22

(54) Gerät zum Herstellen von Softeis, insbesondere Haushalt-Softeisgerät.

(30) Priorität: **15.04.81 CH 2521/81**
**26.01.82 CH 466/82**
**10.03.82 CH 1473/82**

(43) Veröffentlichungstag der Anmeldung:
**20.10.82 Patentblatt 82/42**

(45) Bekanntmachung des Hinweises auf die
Patenterteilung:
**04.07.90 Patentblatt 90/27**

(84) Benannte Vertragsstaaten:
**AT BE CH DE FR GB IT LI LU NL SE**

(73) Patentinhaber: **Gastrotrade AG**
**Oberallmendstrasse 20a**
**CH-6300 Zug (CH)**

(72) Erfinder: **Maurer, Wilhelm**
**Talacherring 15**
**CH-8103 Unterengstringen (CH)**

(74) Vertreter: **Troesch, Hans Alfred, Dr. Ing. et al**
**Walchestrasse 19**
**CH-8035 Zürich (CH)**

(56) Entgegenhaltungen:
BE-A- 435 733     US-A-2 600 010
CH-A- 571 315     US-A-2 662 489
DE-A-1 921 772    US-A-2 863 776
FR-A-1 480 505    US-A-3 403 031
FR-A-2 345 125    US-A-3 619 205
FR-A-2 403 747    US-A-4 083 200
US-A-1 781 249    US-A-4 084 407
US-A-2 600 009

Courier Press, Leamington Spa, England.

**Beschreibung**

Die vorliegende Erfindung betrifft ein Gerät zum Herstellen von Softeis, insbesondere Haushalt-Softeisgerät, mit einem Raum zur Aufnahme einer im wesentlichen blockförmig gefrorenen Softeis-Ausgangsmasse und mit einem rotierbaren, die Masse durch Zerspanen, Schneiden und/ oder Schlagen zerkleinernden und über der Masse befindende Luft in diese zerkleinerte Masse einmischendem Abtrag- und Mischelement.

Haushalt-Softeisgeräte sind bekannt, z.B. aus der CH-PS 624 278. Wesentlicher Bestandteil eines solchen Gerätes war bisher immer dasjenige Element, welches für die Abkühlung des Soft-Mix vorgesehen ist, jenes Element also, das dem Mix die Wärme entzogen hat und diesen zum Erstarren durch Gefrieren brachte. Bei grösseren Geräten dient diesem Zweck fast ausnahmslos ein Kühlaggregat, wie es z.B. in Gefrierschränken Verwendung findet. Bei Haushalt-Softeisgeräten dient diesem Zweck i.a. eine Kältepatrone, deren Kühlsole (z.B. ein Wasser-Salz-Gemisch) zuerst in einem Gefrierschrank eingefroren wird, um alsdann bei Benützung des Gerätes als Kälteträger im Gerät eingesetzt zu werden.

Zum Stande der Technik gehört ferner ein Verfahren zur Zubereitung eines gefrorenen, kohlensäurehaltigen Getränks, bei welchem einer Eismenge ein Geschmacksstoff zugemischt wird. Dabei wird das Eis zu einem verhältnismässig fein verteilten Zustand zerkleinert, während es mit dem Geschmacksstoff vermischt wird. Da dieses Vorgehen in einer Kohlendioxidatmosphäre erfolgt und die Zerkleinerung des Eises unter Bedingungen durchgeführt wird, die eine Aufnahme des Kohlendioxids durch die Mischung bewirken, wird ein kohlensäureartiges Getränk erhalten.

Dieses Verfahren zeigt, wie aufgrund der Löslichkeit des Kohlensäuregases in Flüssigkeit gemäss dem Gesetze von Henry ein kohlensäurehaltiges Getränk hergestellt wird. Dieses Verfahren ist jedoch zur Herstellung von Softeis, wie es die vorliegende Erfindung offenbart, ungeeignet (DE-A1 921 772).

Die Praxis hat gezeigt, dass mit derartigen Haushalt-Softeisgeräten eine stets gleichbleibend gute Softeisqualität nicht erreichbar ist. Es stellte sich daher die Aufgabe, ein derartiges Verfahren und ein Gerät zu schaffen, welches mit Sicherheit bei gleichem Softeisausgangsmaterial eine gleichbleibend gute Softeisqualität erzeugt.

Ein derartiges Gerät zeichnet sich erfindungsgemäss dadurch aus, dass das Abtrag- und Mischelement einen einen gleichmässigen Zerkleinerungsvorgang gewährleistenden Vorschub aufweist, um eine gleichbleibende Softeisqualität sicherzustellen.

Die Erfindung wird anschliessend beispielsweise anhand von Zeichnungen erläutert.

Es zeigen.

Fig. 1 einen Meridianschnitt eines Haushalt-Softeisgerätes,

Fig. 1a einen teilweisen Meridianschnitt in vereinfachter Darstellung eines Haushalt-Softeisgerätes,

Fig. 2 einen Ausschnitt aus einem Haushalt-Softeisgerät analog Fig. 1,

Fig. 2a einen über dem Ausschnitt gemäss Fig. 2 liegenden Ausschnitt,

Fig. 3 das Messer von der Seite mit längsgeschnittener Halterung,

Fig. 4 das Messer nach Fig. 3, um 90° gedreht,

Fig. 5 eine Aufsicht auf das Messer gemäss den Fig. 3 und 4,

Fig. 6—10 Schnitte durch das Messer gemäss den Schnittlinien VI—VI, VII—VII, VIII—VIII, IX—XI und X—X der Fig. 5,

Fig. 11 einen Ausschnitt aus dem Softeis-Haushaltgerät gemäss Schnittlinie IX—IX der Fig. 2.

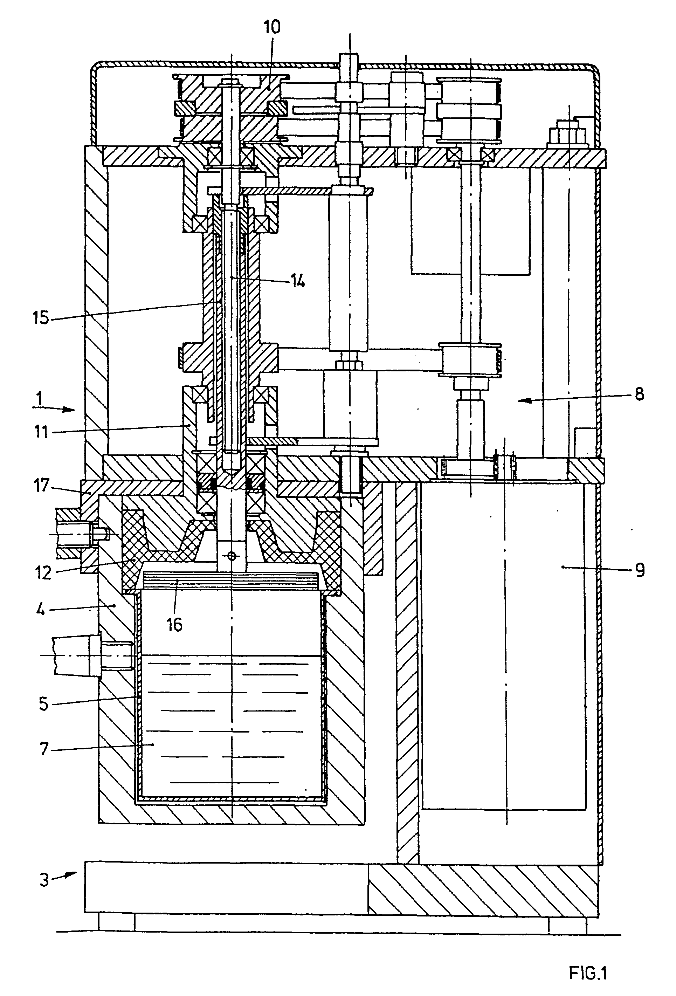

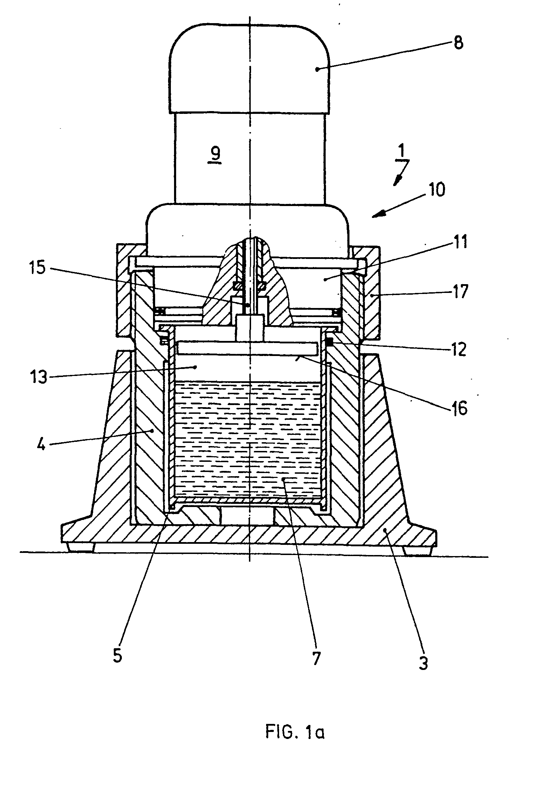

Die Fig. 1 und 1a zeigen im wesentlichen zwei gleiche Haushalt-Softeisgerte 1 mit einem Ständer 3 und einem Isolationseinsatz 4. In diesen kann ein Mischbehälter 5, der zur Maschine gehörend oder als mit Softeismischung gefüllte Dose ausgebildet sein kann, eingesetzt werden, wobei eine Dichtung 12 zwischen Isolation 4 und Behälter 5 vorgesehen ist. Im Behälter 5 befindet sich gefrorene Mischung 7. Ein Antriebsaggregat 8 ist mittels eines Verschlusses 17 auf der Isolation 4 in dargestellter Weise befestigt. Das Aggregat 8 umfasst einen Motor 9 mit Getriebe und Vorschubeinheit 10 sowie im unteren Teil einen Kolben 11 mit einer Dichtung 12, welcher das Innere des Gerätes gasdicht abschliesst. Im Getriebe 10 ist eine Spindelmutter 15 mit einer Gewindespindel 14 vorgesehen. Die Spindelmutter 15 ist am unteren Ende als Welle ausgebildet, an deren Ende sich ein Messer 16, z.B. in Balken- oder Scheibenform, befindet. Beim Zerkleinern wird das Messer 16 gedreht und ihm gleichzeitig ein Vorschub vermittelt, was durch ungleiche Drehzahlen von Gewindespindel 14 und Spindelmutter 15 erreicht wird.

Die Abgrenzung der mittleren Schnittgeschwindigkeit (gemessen auf halbem Messerdurchmesser) liegt bei 1,7 bis 5,3 m/sec. Darunter verschlechtert sich die Softeis-Qualität rasch, darüber wird das Softeis zu weich.

Betreffend des Vorschubes des Messers 16 — es kann auch ein stumpfes Schabwerkzeug, z.B. ein Balken benützt werden — pro Umdrehung, lässt sich festhalten, dass er für die Softeis-Qualität von Bedeutung ist. Praktisch ermittelt liegt beim Abtrag der optimale Vorschub pro Umdrehung bei 0,02 bis 0,03 mm. Dort ergab sich die beste Softeis-Qualität. Eine Abgrenzung nach unten liegt bei ca. 0,005 mm pro Umdrehung. Darunter erwärmt sich das Eis zu stark. Die Abgrenzung nach oben liegt bei ca. 0,1 mm pro Umdrehung. Darüber beginnt mehrheitlich das Abfräsen anstelle des kombinierten Schmelz-Schab-Vorganges, wodurch kein Softeis, sondern ein Eisschnee bzw. körnigere Glace entsteht.

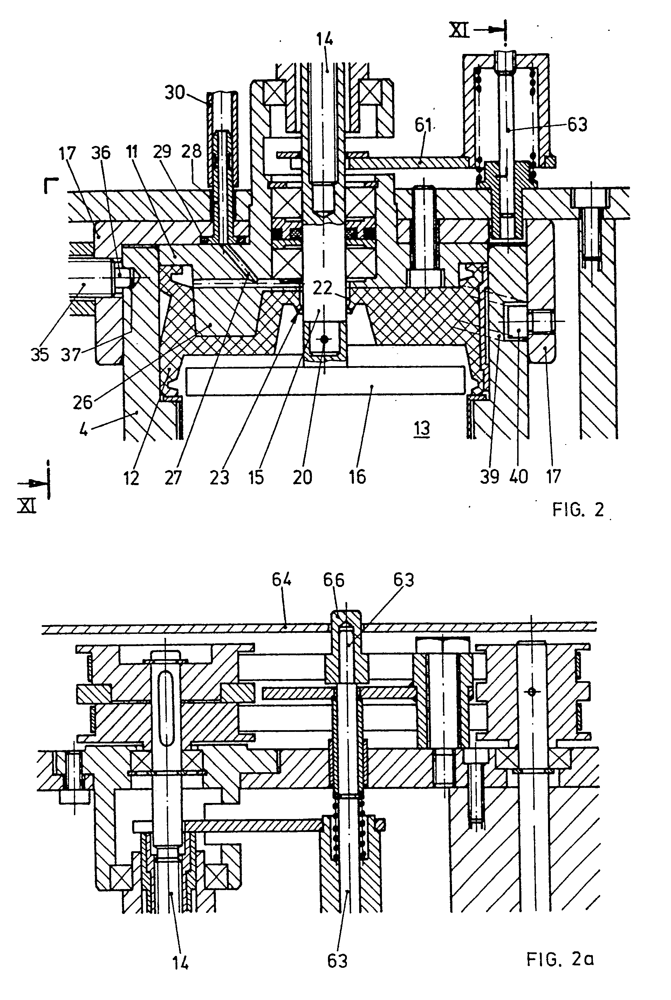

Fig. 2 zeigt einen Ausschnitt aus einer Haushalt-Softeismaschine analog Fig. 1. Gleiche Teile sind in den beiden Figuren gleich bezeichnet.

Das Messer 16, dessen Aufbau anschliessend erläutert wird, ist mittels eines Bolzens 20 mit der es antreibenden Spindelmutter 15 verbunden. Deren Innengewinde steht mit dem Aussengewinde der Gewindespindel 14 im Eingriff. Die Spindel 14 sitzt axial fest aber drehbar im Gehäuse. Die Spindelmutter 15 ist dagegen dreh- und axial verschiebbar angeordnet. Beide sind angetrieben. Die Differenz ihrer Drehzahlen bewirkt ein Absenken oder ein Heben der Spindelmutter 15 mit dem Messer 16. Der Dichtung 12 kommt aus sanitärischen Gründen eine grundlegende Funktion zu. Sie weist in der Mitte für die Spindelmutter 15 einen Durchgang 22 auf, dessen eines Ende durch eine Ringlippe 23 geöffnet oder geschlossen werden kann.

Ueber der Dichtung 12 ist ein Spannkolben 11 angeordnet. Sein der Dichtung 12 zugewandtes Ende kann, wie die linke Hälfte der Fig. 2 zeigt, als Ringwulst 26, oder, analog der Figurenhälfte rechts, als Abschlussdeckel ausgebildet sein. Durch stärkeres Einpressen des Spannkolbens 11 presst der Ringwulst stärker auf die Dichtung 12, wodurch der Anpressdruck der Lippe 23 vergrössert wird. In beiden Fällen der Darstellungen in Fig. 2 ist eine Bohrung 27, ein Nippel 28 mit Dichtung 29 und ein Druckluftversorgerschlauch 30 vorgesehen, um von einer äusseren oder geräteeigenen Quelle Druckluft in den Hohl- bzw. Arbeitsraum 13 zu pressen. Das Gasvolumen im Raum 13, welches sich über dem gefrorenen Mixblock befindet, ist für die Luftaufnahme im Softeis ebenfalls von ausschlaggebender Bedeutung. Normalerweise wird das Verhältnis des Gasvolumens zum Mixvolumen mit 0,5: 1 gewählt, so, dass aus einem Volumen Mix 1,5 Volumen Softeis resultiert. Die Luftigkeit des Softeises kann mithin durch das Luftvolumen im Raum 13 und den Druck dieser Luft auf einfache Art verändert werden. (Henry'sches Absorptionsgesetz).

Hauptaufgabe dieser Dichtung 12 ist es, den Arbeitsraum 13 nach aussen abzudichten, damit in diesem gegenüber der Umgebung ein Ueberdruck aufgebaut werden kann. Die Lippe 23 der Dichtung 12, welche normalerweise an der Spindelmutter 15 anliegt, dient, neben dem Abdichten, noch zwei weiteren Zwecken: Sie sorgt dafür, dass bei Druckabfall der Druckluftseite kein Softeis oder Mix der als Welle ausgebildeten Mutter 15 entlang in den übrigen Raum des Gerätes gelangen kann. Bei normalem Betrieb wirkt diese Lippe 23 als Durchgangs-Rückschlagventil für die zugeführte komprimierte Luft.

Diese Luft, wird durch die Bohrung 27 der Mutter 15 entlang, an der geöffneten Ringlippe 23 vorbei, in den Arbeitsraum 13 geführt. Bedingt durch die Vorspannung der Lippe 23 wirkt diese als Drosselstelle. Daher herrscht auf der getriebeseitigen Seite der Lippe ein um ca. 0,3 bar höherer Luftdruck als im Raum 13.

Somit ist immer ein Ueberdruck oberhalb der Lippe gewährleistet. Es bildet sich immer nur ein Luftstrom in Richtung zum Arbeitsraum 13 entlang der Spindelmutter 15. Dadurch kommt ein sehr begrüssenswerter Doppeleffekt zustande, indem die Spindelmutter 15 an dieser Stelle durch den Luftstrom permanent vom eventuell an sie gespritzten Mix oder Eis gereinigt wird. Zugleich wird der Anlegedruck der Lippe 23 gegen die rotierende Mutter 15 weitgehend aufgehoben. Dies hat zur Folge, dass an dieser Dichtungsstelle die normalerweise entstehende Reibungswärme entfällt. Wärme im Arbeitsraum dieses Gerätes ist logischerweise unerwünscht. Die Lippe 23 dient, wiehre Anordnung schon zeigt, gleichzeitig als Rückschlagventil in jenen Fällen, in denen der Luftdruck, z.B. bei Ausfall des Kompressors, abfällt, wodurch wiederum Mix aus dem Arbeitsraum 13 austreten könnte.

Das Haushalt-Softeisgerät dient der Herstellung von Softeis, was in der folgenden Weise vor sich geht:

Der Mix, wie die flüssige Ausgangsmischung bezeichnet wird, wird im ursprünglichen, flüssigen Zustand eingefroren. Dies kann in einem Gefrierschrank oder einem Kühlschrank mit einem Gefrierfach erfolgen. Soll nun Softeis erzeugt werden, wird der durchgefrorene Mix im gleichen Behälter 5, der z.B. auch eine handelsübliche Vorratsdose oder -Büchse sein kann, in das Haushalt-Softeisgerät 1 eingesetzt. Der Raum, in welchem das Softeis erzeugt werden soll, wird luft- bzw. gasdicht verschlossen, damit im geeigneten Moment das zur Erzeugung des Soft-Effektes erforderliche Gas bzw. die Luft unter Druck eingebracht werden kann. Anschliessend erfolgt eine Zerkleinerung des gefrorenen Mixblocks durch Zerspanen, Schaben, Schneiden und/oder Schlagen mittels eines Werkzeuges, hier des Messers 16, welches gleichzeitig für eine intensive Durchmischung des entstehenden Softeises sorgt. In diesem Sinne sind Schneid- und Mischflügel derart angeordnet, dass ihre Förderrichtung entgegengesetzt ist. Dadurch wird eine hohe Turbulenz und damit ein gutes Mischen erreicht. Dieses Zerkleinern kann durch irgendein Werkzeug erfolgen, welches sich in irgendeiner Art über der Oberfläche des gefrorenen Mix und/oder in diesem bewegt und diesen zerspant, d.h. in kleinen Spänen abschabt oder zerkleinert. Es erfolgt, bedingt durch die hohe Geschwindigkeit des Werkzeuges eine Verflüssigung des gefrorenen Mix durch den auftretenden hohen Druck und die entstehende Reibungswärme. Dank der Umgebungstemperatur gefriert jedoch das sich in der Zwischenzeit mit Luft oder Gas durchmischte Gut sofort wieder. Dabei kann die erforderliche Relativbewegung gleichwertig durch den gefrorenen Mix oder durch das Werkzeug erfolgen. Auch eine gleichzeitige Bewegung von Mix und Werkzeug ist denkbar, um z.B. neben dem Abschabvorgang gleichzeitig den Mischvorgang zu intensivieren.

Die Vorschubeinheit des Aggregates 8 bzw. ein entsprechender Aufsatz oder ein spezielles Getriebe sorgt dafür, dass der Zerkleinerungsvorgang gleichmässig erfolgt. Der Vorschub kann über das Werkzeug oder den gefrorenen Mix erfolgen. Es hat sich bei Versuchen gezeigt, dass z.B. bei bestimmten Voraussetzungen der Vorschub auch durch ein Gewicht oder eine oder mehrere Federn erzeugt werden kann. Nach Beendigung des Zerspanungsvorganges kann vorteilhafterweise das Werkzeug zwecks erhöhter Durchmischung, z.B. mittels eines sog. Eilganges, mehrere Male vor- und rückwärts bewegt werden, bevor der Zerspanungs- und Mischvorgang beendigt wird. Es hat sich indessen als zweckdienlich erwiesen, nach Beendigung des Zerkleinerungsvorganges, die Rückführung des Messers in seine Ausgangslage im Schnellgang vorzunehmen, um nicht unnötige Reibungswärme zu erzeugen; denn die ideale Softeistemperatur nach Erzeugung liegt bei –6°C.

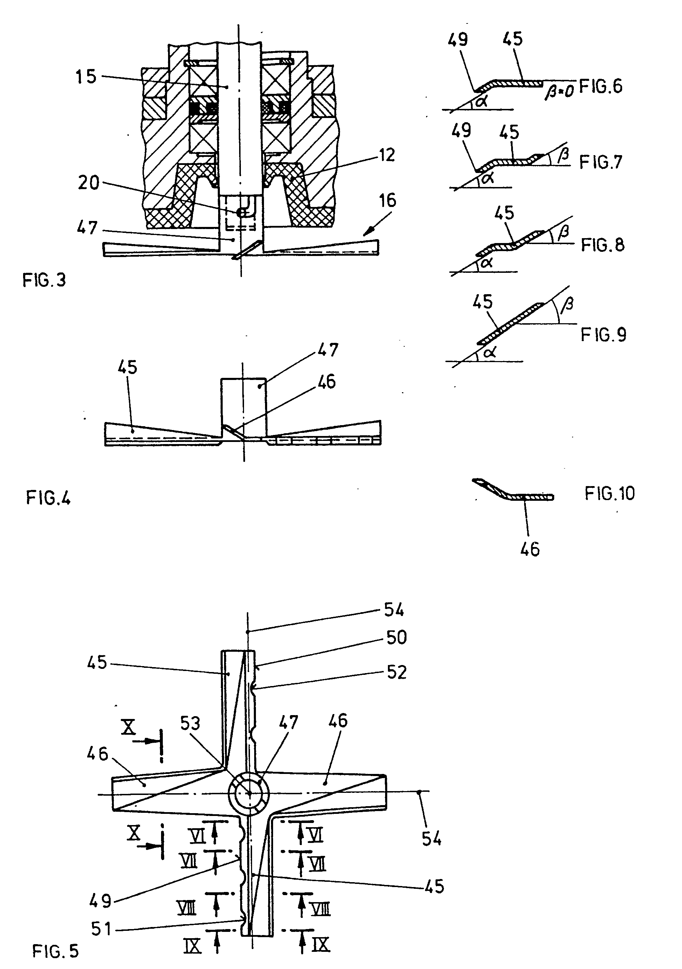

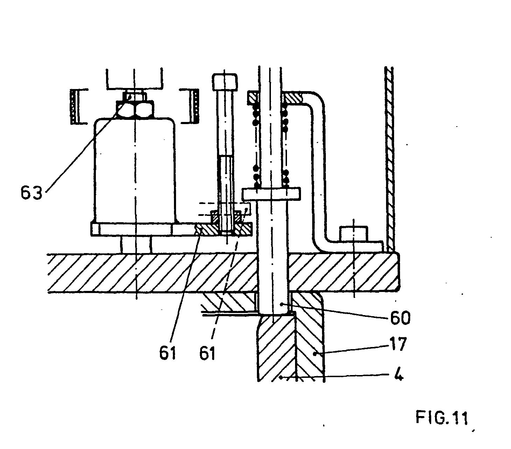

Die Qualität des Softeises hängt, dies zeigten eingehende Versuche, wesentlich vom Schabwerkzeug oder Messer 16 ab. In den Fig. 3—11 ist dargestellt, wie ein derartiges Gebilde vorteilhafterweise ausgebildet sein kann.

Das Messer 16 besteht aus einem Schneideund Reibdoppelflügel 45 und einem zu diesem kreuzweise (Achsenkreuz 54) angeordneten Mischdoppelflügel 46. Die Flügel können aus rostfreiem Blech gestanzt und geformt sein.

Der Doppelflügel 45 weist, wie die Fig. 6 und 7 zeigen, nach der Austrittskante hin einen Anstieg auf, der bei Rotation bewirkt, dass die abgeschabte freie Masse nach oben gefördert wird. Dabei bleibt der negative Anströmwinkel α der Schneide längs der Flügel ungefähr konstant, während von innen nach aussen der Abströmwinkel β konstant bleibt oder zunehmen kann. Der Mischdoppelflügel 46 (Fig. 10) weist einen entgegengesetzten, positiven Anströmwinkel α auf, der bewirkt, dass die Masse nach unten, d.h. umgekehrt, gegen die Schaboberfläche hin, gefördert wird.

Dadurch erfolgt eine ausserordentlich innige Vermischung des Gutes in sich selbst und insbesondere mit der zugeführten Luft, wodurch der sog. Soft-Effekt erzielt wird. Durch die hohe Drehzahl erfolgt diese Vermischung z.T. noch im flüssigen Zustand des Mix, da dieser durch Druck und Reibung der Schneide 49, 50 des Messers 16 kurzfristig aus dem gefrorenen in den flüssigen Zustand überführt wird.

Der Flügel 45 ist in axialer Richtung um ca. 2 mm gegenüber dem Flügel 46 versetzt, damit nur jener den Schneid- und Schmelzvorgang bewirkt. Der Flügel 45 ist somit direkt am Eisblock im Einsatz. Um beide Flügel 45 gleichmässig zu belasten, sind die Schneiden 49, 50 durch Kerben 51, 52 unterbrochen, wobei diese Kerben 51, 52 gegenseitig, in radialer Richtung gemessen, versetzt sind. Die Summe aller Kerbenbreiten in Schneidenrichtung gemessen ist höchstens gleich der Schneidenlänge eines Flügels. Dadurch wird gleichzeitig vermieden, dass nur ein Flügel belastet ist. Dies hätte zur Folge, dass eine Biegebelastung auf die Nabe 47 und damit auf die Mutter 15 entstehen könnte. Um das Messer 16 gut reinigen zu können, ist es mittels eines sog. Bajonettverschlusses an der Antriebswelle, d.h. der Spindelmutter 15, befestigt und somit sehr einfach abzunehmen.

Beim Herstellen von Softeis ist das Einbringen von Luft oder Gas und dessen innige Vermischung mit dem zerspanten bzw. zerkleinerten und gefrorenen Mix eine voraussetzung. Wird der Gasdruck erhöht, so nimmt der Mix in flüssiger Phase die entsprechend erhöhte Gasmenge auf.

Das Untergasdrucksetzen kann z.B. dadurch erfolgen, dass im Gerät 1 über dem Mix 7 ein Hohlraum 13 belassen wird, welcher beim Aufsetzen des "Deckels" durch den Kolben 11 verkleinert wird. Dadurch wird die in diesem Hohlraum 13 befindliche Luft komprimiert. Anschliessend mischt sich während des Zerkleinerungsvorganges diese komprimierte Luft mit dem zerkleinerten Mix 7. Der Druck des Gases beträgt im Raum 13 0,5—5 bar, vorzugsweise 2 bar.

Eine andere Lösung des Einbringens von Luft oder Gas besteht darin, dass mittels einer pumpe dieses Medium in komprimierter Form in den Mischraum gebracht oder dass unter Verwendung von sog. Gaspatronen der Druck im Mischraum auf den gewünschten Wert gesteigert wird.

Das Ausbringen des fertigen Softeises aus dem Mischbehälter 5 resp. der Dose kann auf verschiedene Arten erfolgen. Das Softeis kann z.B. direkt aus der Dose konsumiert werden. Es kann aber auch im Mischbehälter 5 belassen werden, auf welchen anstelle des Antriebsaggregates 8 alsdann ein Deckel aufgesetzt wird, welcher mit einem Auslassventil und einem pressluftventil versehen ist. Nachdem der Deckel luftdicht am Unterteil des Gerätes 1 befestigt ist, wird durch das Pressluftventil mittels Pumpe oder Druckpatrone erneut Druck auf den Behälter 5 und damit das fertige Softeis gegeben. Durch Betätigung des Auslassventils wird alsdann nach Wunsch das Softeis aus dem Behälter gedrückt. Eine weitere Variante besteht darin, dass ein Deckel auf den Behälter aufgesetzt wird, welcher über ein von Hand oder motorisch betätigtes System einen Kolben in den Behälterraum drückt, wodurch das Softeis wiederum durch eine Oeffnung entnommen werden kann.

Das in der beiliegenden Zeichnung dargestellte Haushalt-Softeisgerät 1 zeigt eine Variante mit bewegtem Messer 16 resp. Werkzeug und einem mechanisch erzeugten, z.B. stufenlos verstellbaren Vorschub. Der Mischvorgang nach dem Abschaben erfolgt durch ein- oder mehrmaliges, vollautomatisches Rühren des Mixes im Anschluss an den vollständig beendeten Zerspanungsvorgang. Das Abstellen des Gerätes 1 erfolgt bei diesem Gerät automatisch. Es kann z.B. ein akustisches Signal die Beendigung der Softeiserzeugung anzeigen.

Es ist möglich, die Softeismischung aus Granulat unter Beimischung von Wasser und ev. Milch herzustellen. Auch kann das Zerkleinern ohne Gasüberdruck und erst das Mischen unter Gasüberdruck erfolgen.

Beobachtungen haben gezeigt, dass beim Abschaben an der Messerschneide bzw. der Vorderkante des Schabwerkzeuges sich überwiegend ein Schmelzvorgang vollzieht und ein anschliessendes sofortiges Gefrieren mit Luft- bzw. Gaseinschlüssen erfolgt.

Eine ausgezeichnete Softeis-Qualität ergab sich nach diesem Verfahren, wenn das Werkzeug mit ungefähr 2000 Umdrehungen/min und einem sehr kleinen Vorschub von 0,02 mm pro Umdrehung dieses Werkzeuges arbeitete. Stellt man sich den Span vor, welchen das Werkzeug von der Eisoberfläche abarbeiten soll, erkennt man, dass Eis sich kaum so dünn zerspanen lässt, da es recht brüchig ist. So zeigte denn auch der Versuch, dass es praktisch unwesentlich ist, ob die Schneide am Werkzeug stumpf oder sehr scharf ist. Daraus lässt sich folgern, dass das Werkzeug diese sehr dünne Schicht des gefrorenen Gutes durch Druck und/oder Reibungswärme verflüssigt. Durch die hohe Bearbeitungs-Geschwindigkeit wird diese kurzfristig flüssige Masse mit der unter erhöhtem Druck vorhandenen Luft gemischt und gefriert dank der umgebenden tiefen Temperatur augenblicklich wieder. Das Softeis ist fertig.

Die vorerläuterte Konstruktion einer Haushalt-Softeismaschine muss gegen gefährliche Auswirkungen der im Gerät eingeschlossenen Druckluft gesichert sein. Diesem Zweck dient ein in Fig. 2 ersichtlicher, gegen Federkraft herausziehbarer Sicherungsbolzen 35 im Verschluss 17, dessen Kopf 36 in ein Sackloch 37 des Einsatzes 4 eingreift und dadurch ein Abheben des Verschlusses 17 verunmöglicht. Ferner befindet sich am Einsatz 4 eine schraubenlinienförmig verlaufende Aussennut, in welche ein am Verschluss 17 angeordneter Nokken 40 eingreift.

Die Nut 39 mündet am oberen Ende des Behälters 4 aus. In dieser Lage wird der Nocken 40 — es können auch mehrere sein — frei. Nun kann der Verschluss 17 abgenommen werden. Der Zweck der schraubenförmigen Nut 39 ist es, unter anderem zu verhüten, dass beim Entriegeln nach dem Arbeitsvorgang durch den im Arbeitsraum 13 vorhandenen Druck der Mischbehälter 5 nach unten geschlagen wird.

Durch Drehen des Behälters 5 von Hand nach dem Entsichern fährt dieser entlang der Nut nach unten und öffnet den Arbeitsraum 13 gegen die Umgebung, wodurch sich der Druck abbauen kann, bevor die eigentliche Trennstellung erreicht ist.

Um die Unfallgefahr weiter herabzusetzen, darf das Messer 16 nicht rotieren, solange der Verschluss 17 (Fig. 2) nicht eingerastet ist. Diese weitere Absicherung erfolgt durch einen Bolzen, welcher erst bei eingerastetem Verschluss 17 eine Platte 61 und somit einen Endschalter (nicht dargestellt) zwecks Einschaltung des Antriebsaggregates 8 freigibt. Im Betriebszustand, d.h. wenn dieser Endschalter auf "Ein" steht, ragt die Verlängerung 66 einer Schaltwelle 63 über die Abdeckung 64 hinaus. Wird dieses Ende 66 nach unten gedrückt, erfolgt im logischen Aufbau des Schaltzyklus, wie er im einzelnen in der CH-Patentanmeldung 7445/81-8 vom 20. November 1981 erläutert ist, eine Umschaltung auf den schnelleren Retourgang. Wird nicht nur ein kurzer Impuls auf das Ende 66 gegeben, d.h. wenn dieses Wellenende 66 dauernd gedrückt wird, wird nach wenigen Sekunden das Antriebsaggregat 8 abgestellt, da dann durch den Retourgang der Endschalter auf "Aus" geht.

Dank dieser Funktion kann ohne grosse Zusätze am Gerät dieses im Ablauf seines Arbeitsvorganges unterbrochen werden, wenn z.B. unnatürliche Geräusche anzeigen, dass z.B. ein Fremdkörper im Mix miteingefroren wurde.

**Patentansprüche**

1. Gerät zum Herstellen von Softeis, insbesondere Haushalt-Softeisgerät, mit einem Raum zur Aufnahme einer im wesentlichen blockförmig gefrorenen Softeis-Ausgangsmasse und mit einem rotierbaren, die Masse durch Zerspanen, Schneiden und/oder Schlagen zerkleinernden und über der Masse befindende Luft in diese zerkleinerte Masse einmischendem Abtrag- und Mischelement, dadurch gekennzeichnet, dass das Abtragund Mischelement (16; 45, 46) einen einen gleichmässigen Zerkleinerungsvorgang gewährleistenden Vorschub aufweist, um eine gleichbleibende Softeisqualität sicherzustellen.

2. Gerät nach Anspruch 1, dadurch gekennzeichnet, dass das Abtrag- und Mischelement (16; 45, 46) mit einer Spindelmutter (15) antriebsverbunden ist, welche ihrerseits mit einer Gewindespindel (14) im Gewindeeingriff steht, wobei der Vorschub des Abtrag- und Mischelementes (16; 45, 46) durch ungleiche Drehzahlen von Gewindespindel (14) und Spindelmutter (15) erreicht wird.

3. Gerät nach Anspruch 1 oder 2, dadurch gekennzeichnet, dass das Abtrag- und Mischelement (16; 45, 46) zum Zerkleinern Mittel für eine Vorschubänderung von 0,005 bis 1 mm, vorzugsweise 0,005 0,1 mm aufweist, z.B. auswechselbare Gewindespindeln (14, 15).

4. Gerät nach einem der Ansprüche 1—3, dadurch gekennzeichnet, dass das Abtrag- und Mischelement (16; 45, 46) als balkenförmiger Doppelflügel (45) ausgebildet ist.

5. Gerät nach einem der Ansprüche 1—4, dadurch gekennzeichnet, dass das Abtrag- und Mischelement (16; 45, 46) kreuzförmig, vorzugsweise mit einem Messerbalken (45) und einem Mischbalken (46), ausgebildet ist.

6. Gerät nach einem der Ansprüche 1—5, dadurch gekennzeichnet, dass das Abtrag- und Mischelement (16; 45, 46) als Messer ausgebildet ist, dessen Schneiden (49, 50) mit Kerben (51, 52) versehen sind, von welchen vorzugsweise jede von der Drehachse einen anderen Abstand aufweist und die Summe der Kerbenbreite höchstens gleich der Schneidenlänge eines Flügels ist.

7. Gerät nach einem der Ansprüche 1—6, dadurch gekennzeichnet, dass das Messer (16) profilierte Schneidflügel (45) aufweist, vorzugsweise mit über die Schneide gleichbleibendem Anströmwinkel ($\alpha$) und gegebenenfalls von innen nach aussen zunehmendem oder konstantem Abströmwinkel ($\beta$).

8. Gerät nach einem der Ansprüche 1—7, dadurch gekennzeichnet, dass das Messer profilierte Mischflügel (46) aufweist, beispielsweise mit von innen nach aussen zunehmender oder gleichbleibender Verwindung, zum Zwecke, eine optimale Mischfläche zu schaffen.

9. Gerät nach einem der Ansprüche 1—8, dadurch gekennzeichnet, dass die Messerschneiden (49) nicht in der gleichen Normalebene zur Messerdrehachse liegen wie die Austrittskanten der Mischflügel.

10. Gerät nach einem der Ansprüche 1—9, dadurch gekennzeichnet, dass die Förderrichtung des Schneidflügels (45) und des Mischflügels (46) ungleich, vorzugsweise entgegengesetzt sind, zwecks Turbulenzerzeugung.

11. Gerät nach einem der Ansprüche 1—10, dadurch gekennzeichnet, dass die Schneide des Messers sekantal, ausserradial angeordnet ist. (Fig. 5)

12. Gerät nach einem der Ansprüche 1—11, dadurch gekennzeichnet, dass die Schneide des Abtrag- und Mischelementes (16; 45, 46) gerade oder geschweift ist.

13. Gerät nach einem der Ansprüche 1—12, dadurch gekennzeichnet, dass der Gerätedeckel als Kolben (11) ausgebildet ist, um die Softeismischung (7) unter Ueberdruck zu setzen.

14. Gerät nach einem der Ansprüche 1—13, dadurch gekennzeichnet, dass der Deckel und das Arbeitsgefäss, vorzugsweise ein Isolationsgefäss (4), durch Nut (39) und Nocken (40) zum Schliessichern durch Drehen versehen sind.

15. Gerät nach einem der Ansprüche 1—14, dadurch gekennzeichnet, dass ein z.B. als Welle ausgebildetes, insbesondere durch Druck betätigbares, Notschaltelement (63, 66) vorgesehen ist.

16. Gerät nach einem der Ansprüche 1—15, gekennzeichnet durch ein Sicherungsorgan, um das Einschaltendes Antriebes bei nicht geschlossenem Gefäss zu verunmöglichen.

17. Gerät nach einem der Ansprüche 1—16, dadurch gekennzeichnet, dass der Softeisbearbeitungsraum (13) ein als Dichtung (12) ausgebildetes Rückschlagventil zur Zufuhr von Gas in den Raum (13) aufweist, wobei vorzugsweise eine gummielastische Lippe (23) den Ventilkörper und die Drehwelle (15) des Schabmessers (16) den Ventilsitz bilden.

18. Gerät nach Anspruch 17, dadurch gekennzeichnet, dass Mittel (26) vorgesehen sind, um die Schliess- Spannung der Lippe (23) zu ändern.

19. Gerät nach einem der Ansprüche 1—18, dadurch gekennzeichnet, dass das Gasvolumen (13) über dem Mixvolumen sich zu diesem ungefähr wie 0,5 : 1 verhält, um aus einem Volumen gefrorenem Mix 1,5 Volumen Softeis zu erzeugen.

## Revendications

1. Appareil pour la fabrication de soft ice, en particulier appareil ménager de fabrication de soft ice, comportant un espace pour recevoir une masse de départ de soft ice, essentiellement congelée sous la forme d'un bloc, et un élément rotatif de désagrégation et de malaxage, qui broie la masse par cisaillement, tranchage et/ou percussion et introduit, en l'y mélangeant, dans cette masse broyée, l'air qui se trouve au-dessus de la masse, caractérisé par le fait que l'élément de désagrégation et de malaxage (16; 45, 46) présente une avance assurant un processus uniforme de broyage pour garantir une qualité constante de soft ice.

2. Appareil selon la revendication 1, caractérisé par le fait que l'élément de désagrégation et de malaxage (16; 45, 46) est relié, pour son entraînement, à un écrou (15) de vis-mère qui, de son côté, engrène avec une vis-mère (14), l'avance de l'élément de désagrégation et de malaxage (16; 45, 46) résultant des vitesses de rotation inégales de la vis-mère (14) et de l'écrou de vis-mère (15).

3. Appareil selon la revendication 1 ou 2, caractérisé par le fait que l'élément de désagrégation et de malaxage (16; 45, 46) prévu pour le broyage, présente des moyens pour une modification de l'avance de 0,005 à 1 mm, de préférence de 0,005 à 0,1 mm, constitués par exemple par des vis-mères interchangeables (14, 15).

4. Appareil selon l'une des revendications 1 à 3, caractérisé par le fait que l'élément de désagrégation et de malaxage (16; 45, 46) est constitué par une double pale (45) en forme de barreau.

5. Appareil selon l'une des revendications 1 à 4, caractérisé par le fait que l'élément de désagrégation et de malaxage (16; 45, 46) a la forme d'une croix, de préférence avec une branche-couteau (45) et une branche (46) pour le malaxage.

6. Appareil selon l'une des revendications 1 à 5, caractérisé par le fait que l'élément de désagrégation et de malaxage (16; 45, 46) est conçu sous la forme d'un couteau dont les tranchants (45, 50) présentent des encoches (51, 52) dont, de préférence, chacune se trouve à une distance différente de l'axe de rotation, et la somme des largeurs des encoches est au maximum égale à la longueur du tranchant d'une pale.

7. Appareil selon l'une des revendications 1 à 6, caractérisé par le fait que le couteau (16) présente des pales de tranchage profilées (45), de préférence avec un angle d'attaque (α) qui reste constant le long du tranchant et un angle de fuite (β) éventuellement croissant ou constant de l'intérieur vers l'extérieur.

8. Appareil selon l'une des revendications 1 à 7, caractérisé par le fait que le couteau présente des pales de malaxage profilées (46), par exemple avec un gauchissement qui va en croissant ou qui reste constant de l'intérieur vers l'extérieur, dans le but d'offrir une surface de malaxage optimale.

9. Appareil selon l'une des revendications 1 à 8, caractérisé par le fait que les tranchants (49) du couteau ne se trouvent pas dans le même plan, normal à l'axe de rotation du couteau, que les bords de sortie des pales de malaxage.

10. Appareil selon l'une des revendications 1 à 9, caractérisé par le fait que les directions de transport de la pale de tranchage (45) et de la pale de malaxage (46) sont distincts, de préférence opposées, dans le but de produire une turbulence.

11. Appareil selon l'une des revendications 1 à 10, caractérisé par le fait que le tranchant du couteau est disposé selon une sécante, hors de tout alignement radial (figure 5).

12. Appareil selon l'une des revendications 1 à 11, caractérisé par le fait que le tranchant de l'élément de désagrégation et de malaxage (16; 45, 46) est rectiligne ou échancré.

13. Appareil selon l'une des revendications 1 à 12, caractérisé par le fait que le couvercle de l'appareil est conçu sous la forme d'un piston (11) pour permettre de placer le mélange de soft ice (7) sous surpression.

14. Appareil selon l'une des revendications 1 à 13, caractérisé par le fait que le couvercle et le récipient de travail, de préférence un récipient isolant (4), présentent une rainure (39) et un ergot (40) pour assurer leur fermeture par rotation.

15. Appareil selon l'une des revendications 1 à 14, caractérisé par le fait qu'il est prévu un élément de mise hors tension d'urgence (63, 66), par exemple conçu sous la forme d'une tige, en particulier manoeuvrable par pression.

16. Appareil selon l'une des revendications 1 à 15, caractérisé par un organe de sécurité pour rendre impossible la mise sous tension de l'entraînement lorsque le récipient n'est pas fermé.

17. Appareil selon l'une des revendications 1 à 16, caractérisé par le fait que l'espace (13) de traitement de la soft ice présente un clapet antiretour, conçu sous la forme d'une garniture d'étanchéité (12), pour l'admission de gaz dans l'espace (13) et que ce sont de préférence une lèvre (23), en un matériau elastique du type caoutchouc, qui forme le corps du clapet et l'arbre (15) d'entraînement en rotation du couteau de raclage (16) qui forme le siège du clapet.

18. Appareil selon la revendication 17, caractérisé par le fait que des moyens (26) sont prévus pour modifier la contrainte de fermeture de la lèvre (23).

19. Appareil selon l'une des revendications 1 à 18, caractérisé par le fait que le volume de gaz (13), qui se trouve au-dessus du volume de mix, est, avec celui-ci, dans un rapport d'environ 0,5:1, pour, à partir d'un volume de mix congelé, produire 1,5 volume de soft ice.

**Claims**

1. Machine for producing soft ice cream, in particular a domestic soft ice cream maker, comprising a space for receiving the soft ice cream starting material essentially in the form of a frozen block and a rotatable eroding and mixing element for crushing the material by a process of shaving, cutting and/or beating and by mixing air above it into this crushed material characterised in that the eroding and mixing element (16; 45, 46) has a forward feed ensuring a uniform crushing operation, in order to reliably produce soft ice cream of consistent quality.

2. Machine according to claim 1, characterised in that the eroding and mixing element (16; 45 46) is drivingly connected with a spindle nut (15), which in turn is in engagement with a threaded spindle (14), whereby the forward feed of the eroding and mixing element (16; 45, 46) is achieved by unequal speeds of threaded spindle (14) and spindle nut (15).

3. Machine according to claim 1 or 2, characterised in that in order to crush the material the eroding and mixing element (16; 45, 46) comprises means such as replaceable threaded spindles (14, 15) for changing the forward feed from 0.005 to 1 mm, preferably 0.005—0.1 mm.

4. Machine according to one of claims 1—3, characterised in that the eroding and mixing element (16; 45, 46) is shaped as a beam-shaped twin blade (45).

5. Machine according to one of claims 1—4, characterised in that the eroding and mixing element (16; 45, 46) is cruciform in shape, preferably comprising a knife beam (45) and a mixing beam (46).

6. Machine according to one of claims 1—5, characterised in that the eroding and mixing element (16; 45, 46) is shaped as a knife, the cutting edges (49, 50) of which are provided with notches (51, 52), each at a different distance from the rotary axis, and where the notch width total is, at the most, equal to the length of the cutting edge of one blade.

7. Machine according to one of claims 1—6, characterised in that the knife (16) has profiled cutting blades (45), which preferably have a constant angle of attack ($\alpha$) across the cutting edge and, as required, an angle of discharge ($\beta$), which increases from inside to outside or is constant.

8. Machine according to one of claims 1—7, characterised in that the knife (16) has profiled mixing blades (46) with a torsion, which increases from inside to outside or is constant for the purpose of creating an optimal mixing surface.

9. Machine according to one of claims 1—8, characterised in that the cutting edges (49) do not lie in the same normal plane to the knife rotary axis as the trailing edges of the mixing blades.

10. Machine according to one of claims 1—9, characterised in that the feed directions of the cutting blade (45) and the mixing blade (46) are unequal, preferably opposing each other, for the purpose of creating turbulence.

11. Machine according to one of claims 1—10, characterised in that the cutting edge of the knife is arranged secantally, off radially (Figure 5).

12. Machine according to one of claims 1—11, characterised in that the cutting edge of the eroding and mixing element (16; 45, 46) is straight or curved.

13. Machine according to one of claims 1—12, characterised in that the machine lid is shaped as a piston (11) for subjecting the soft ice cream mixture (7) to overpressure.

14. Machine according to one of claims 1—13, characterised in that the lid and the working vessel, preferably an insulation vessel (4), are provided with a groove (39) and cam (40) for locking by rotation.

15. Machine according to one of claims 1—14, characterised in that a preferably pressure-actuated emergency switch element (63, 66) is provided which may be shaped as a shaft.

16. Machine according to one of claims 1—15, characterised by a safety mechanism in order to prevent the drive from switching on when the vessel is not closed.

17. Machine according to one of claims 1—16, characterised in that the soft ice cream working space (13) has a non-return valve shaped as a seal (12) for the supply of gas into the space (13), the valve seat being preferably formed by a rubber-elastic lip (23) and the rotary shaft (15) of the scraping knife (16).

18. Machine according claim 17, characterised in that means (26) are provided for changing the closing tension of lip (23).

19. Machine according to one of claims 1—18, characterised in that the gas volume (13) to mix volume ratio is approximately 0.5 : 1 for producing 1.5 volume of soft ice cream from one volume of frozen mix.

FIG.1

FIG. 1a

FIG. 2

FIG. 2a

FIG.3

FIG.4

FIG.5

FIG.6

FIG.7

FIG.8

FIG.9

FIG.10

63

61  61

60

17

4

FIG.11